# EUROPÄISCHE PATENTSCHRIFT

(11) **EP 1 275 700 B1**
(45) Veröffentlichungstag und Bekanntmachung des Hinweises auf die Patenterteilung: **28.02.2007**
(21) Anmeldenummer: 02405560.0
(22) Anmeldetag: 04.07.2002
(51) Int. Cl.: C09B 62/085, C09B 62/51, D06P 3/24, D06P 1/38, C09B 67/22, C09B 62/44

(54) **Verfahren zum Trichromie-Färben oder -Bedrucken von synthetischen Polyamidfasermaterialien**
Process of trichromic dyeing or printing of synthetic polyamide materials
Procédé de teinture ou d'impression en trichromie de matériaux fibreux en polyamide synthétique

(30) Priorität: 12.07.2001 CH 127901; 30.10.2001 CH 198701
(43) Veröffentlichungstag der Anmeldung: 15.01.2003
(73) Patentinhaber: Huntsman Advanced Materials (Switzerland) GmbH, 4057 Basel (CH)
(72) Erfinder: Schmiedl, Jürgen, 79585 Steinen (DE); Koch, Klaus, 4132 Muttenz (CH); Mundle, Wolfgang, 79576 Weil am Rhein (DE); Grüner, Franz, 79650 Schopfheim (DE)

(56) Entgegenhaltungen:
- EP-A- 0 775 776
- EP-A- 0 826 743
- EP-A- 0 922 735
- EP-A- 1 247 842
- US-A- 4 191 687
- US-A- 5 760 194
- US-A- 5 760 195

## Beschreibung

Die vorliegende Erfindung betrifft ein Verfahren zum Trichromie-Färben oder -Bedrucken sowie die zu diesem Zweck besonders geeigneten, rotfärbenden Reaktivfarbstoffe.

In der EP-A-0775776 wird ein Verfahren zum Di- oder Trichromie-Färben oder -Bedrucken von natürlichem oder synthetischen Polyamidfasermaterial beschrieben, worin ein blaufärbender reaktiver Anthrachinonfarbstoff verwendet wird.

Die der vorliegenden Erfindung zugrundeliegende Aufgabe war es, ein Verfahren zum Färben oder Bedrucken von synthetischen Polyamidfasermaterialien, beispielsweise Teppichgeweben, mit zur Kombination nach dem Trichromie-Prinzip geeigneten Reaktivfarbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben in besonderer Weise. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus, und weisen eine gute Faseregalität und keinen Dichroismus auf.

Gegenstand der vorliegenden Erfindung ist somit ein Verfahren zum Trichromie-Färben oder Bedrucken von synthetischem Polyamidfasermaterial, worin man mindestens einen rotfärbenden Reaktivfarbstoff der Formel 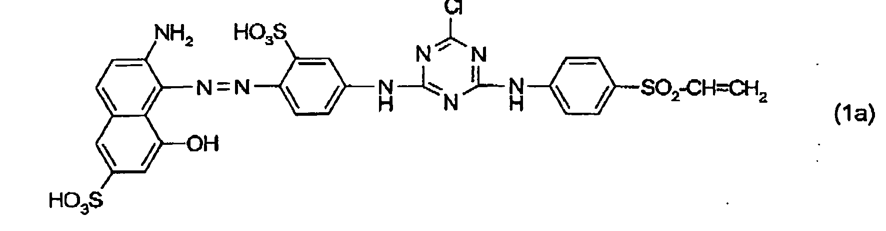 zusammen mit mindestens einem der gelb- oder orangefärbenden Reaktivfarbstoffe der Formeln 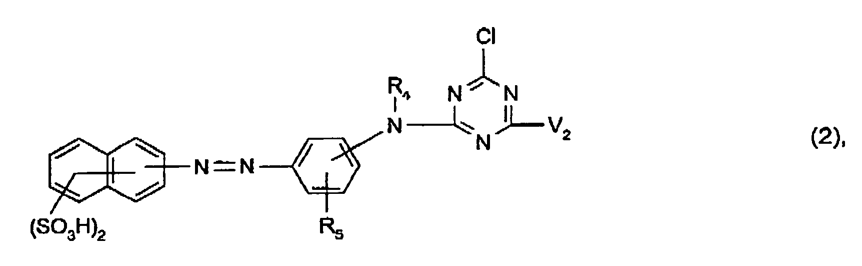 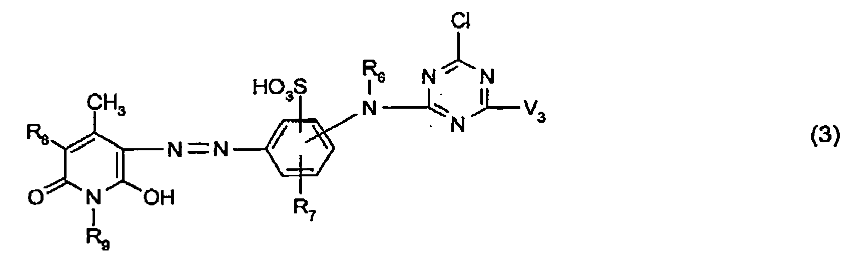 und 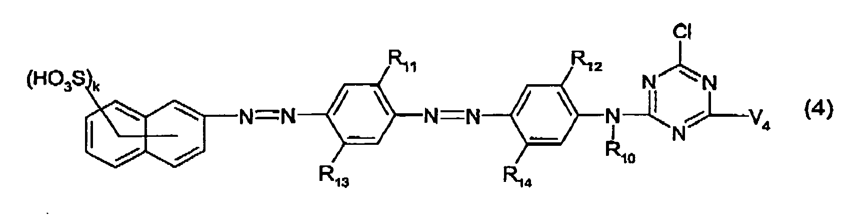 und mindestens einem blaufärbenden Reaktivfarbstoff der Formel 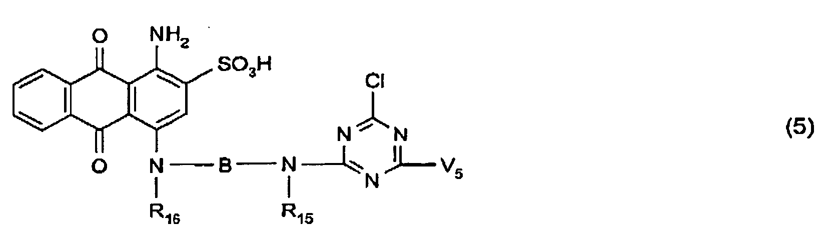 verwendet, worin
R₄, R₆, R₁₀, R₁₅ und R₁₆ unabhängig voneinander Wasserstoff, unsubstituiertes oder durch Hydroxy, Sulfo, Sulfato, Carboxy oder Cyano substituiertes C₁-C₄-Alkyl bedeuten,
R₅, R₇, R₁₃ und R₁₄ unabhängig voneinander Wasserstoff, C₁-C₄-Alkyl, C₁-C₄-Alkoxy, C₂-C₄-Alkanoylamino, Ureido, Sulfamoyl, Halogen, Sulfo oder Carboxy sind,
R₈ für Wasserstoff, Sulfomethyl, Carbamoyl oder Cyano steht, -
R₉ C₁-C₄-Alkyl ist,
R₁₁ und R₁₂ unabhängig voneinander Wasserstoff, C₁-C₄-Alkyl, C₁-C₄-Alkoxy, Halogen, Sulfo oder Carboxy sind,
B ein C₂-C₆-Alkylenrest, welcher durch 1, 2 oder 3 Glieder -O- unterbrochen sein kann und unsubstituiert oder durch Hydroxy oder Sulfato substituiert ist, oder
ein gegebenenfalls durch C₁-C₄-Alkyl substituierter Cyclohexylenrest oder Methylen-cyclohexylenrest, oder
ein gegebenenfalls durch C₁-C₄-Alkyl, C₁-C₄-Alkoxy, Halogen oder Sulfo substituierter Phenylen oder Methylen-phenylen-methylenrest ist,
l die Zahl 0 oder 1 bedeutet,
k die Zahl 1, 2 oder 3 ist, und
V₂, V₃, V₄ und V₅ unabhängig voneinander für einen Rest der Formel

   -NH-(CH₂)₂₋₃-SO₂Z (6a),

   -NH-(CH₂)₂₋₃-O-(CH₂)₂₋₃-SO₂Z (6b),

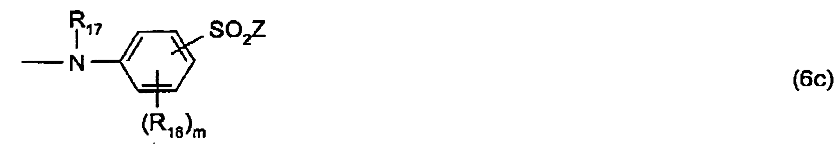

   oder 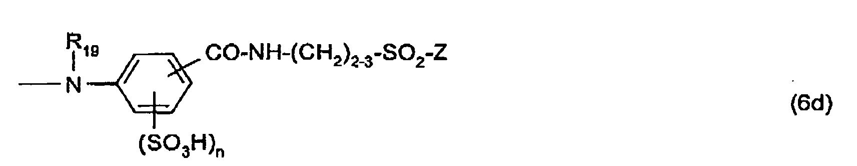 stehen, worin
R₁₇ und R₁₉ unabhängig voneinander Wasserstoff, unsubstituiertes oder durch Hydroxy, Sulfo, Sulfato, Carboxy oder Cyano substituiertes C₁-C₄-Alkyl bedeuten, R₁₈ C₁-C₄-Alkyl, C₁-C₄-Allkoxy, Halogen oder Sulfo ist,
Z der Rest -CH=CH₂ oder -CH₂-CH₂-Y und Y eine Abgangsgruppe bedeutet,
m die Zahl 0, 1 oder 2 ist,
n für die Zahl 0 oder 1 steht,
oder V₂, V₃, V₄ und V₅ unabhängig voneinander für einen Rest der Formel 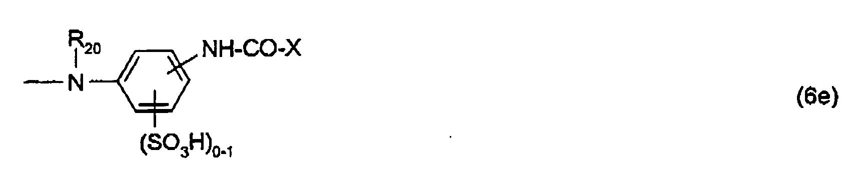 stehen, worin
R₂₀ Wasserstoff, unsubstituiertes oder durch Hydroxy, Sulfo, Sulfato, Carboxy oder Cyano substituiertes C₁-C₄-Alkyl bedeutet, und
X der Rest 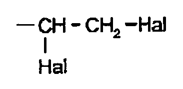 oder 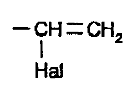 und Hal Brom oder Chlor ist,
mit der Massgabe, dass
der Farbstoff der Formel (1) zwei Sulfogruppen enthält.

Die Reste R₄, R₆, R₁₀, R₁₅, R₁₆, R₁₇, R₁₉ und R₂₀ sind als Alkylreste geradkettig oder verzweigt. Die Alkylreste können durch Hydroxy, Sulfo, Sulfato, Cyano oder Carboxy weitersubstituiert sein. Als Beispiele seien Methyl, Ethyl, n-Propyl, Isopropyl, n-Butyl, Isobutyl, sek.-Butyl oder tert.-Butyl, sowie die entsprechenden durch Hydroxy, Sulfo, Sulfato, Cyano oder Carboxy substituierten Reste genannt. Als Substituenten sind Hydroxy, Sulfo oder Sulfato, insbesondere Hydroxy oder Sulfato und ganz besonders Hydroxy bevorzugt.

Gemäss einer interessanten Ausführungsform bedeutet einer der Reste R₁₅ und R₁₆ durch Hydroxy, Sulfo, Sulfato, Cyano oder Carboxy substituiertes C₁-C₄-Alkyl, und der andere der Reste R₁₅ und R₁₆ Wasserstoff oder C₁-C₄-Alkyl, insbesondere Wasserstoff, falls B ein C₂-C₈-Alkylenrest bedeutet, welcher durch 1, 2 oder 3 Glieder -O- unterbrochen sein kann und unsubstituiert oder durch Hydroxy oder Sulfato substituiert ist.

Als C₁-C₄-Alkyl kommen für R₅, R₇, R₁₁, R₁₂, R₁₃, R₁₄ und R₁₈ unabhängig voneinander z.B. Methyl, Ethyl, n-Propyl, Isopropyl, n-Butyl, sek.-Butyl, tert.-Butyl oder Isobutyl, vorzugsweise Methyl oder Ethyl und insbesondere Methyl, in Betracht.

R₉ als C₁-C₄-Alkyl ist z.B. Methyl, Ethyl, n-Propyl, Isopropyl, n-Butyl, sek.-Butyl, tert.-Butyl oder Isobutyl, vorzugsweise Methyl oder Ethyl und insbesondere Ethyl.

Als C₁-C₄-Alkoxy kommen für R₅, R₇, R₁₁, R₁₂, R₁₃, R₁₄ und R₁₈ unabhängig voneinander z.B. Methoxy, Ethoxy, Propoxy, Isopropoxy, n-Butoxy, sek.-Butoxy, tert.-Butoxy oder Isobutoxy, vorzugsweise Methoxy oder Ethoxy und insbesondere Methoxy, in Betracht.

Als C₂-C₄-Alkanoylamino kommen für R₅, R₇, R₁₃ und R₁₄ unabhängig voneinander z.B. Acetylamino oder Propionylamino und insbesondere Acetylamino, in Betracht.

Als Halogen kommen für R₅, R₇, R₁₁, R₁₂, R₁₃, R₁₄ und R₁₈ unabhängig voneinander z.B. Fluor, Chlor oder Brom, vorzugsweise Chlor oder Brom und insbesondere Chlor, in Betracht.

Für B als gegebenenfalls durch C₁-C₄-Alkyl substituierten Cyclohexylenrest oder Methylen-cyclohexylenrest, oder gegebenenfalls durch C₁-C₄-Alkyl, C₁-C₄-Alkoxy, Halogen oder Sulfo substituierten Phenylen oder Methylen-phenylen-methylenrest kommen als C₁-C₄-Alkyl, C₁-C₄-Alkoxy und Halogen z.B. die oben für R₂, R₅, R₇, R₁₁, R₁₂, R₁₃, R₁₄ und R₁₈ angegebenen Reste mit den angegebenen Bevorzugungen in Betracht.

Bei der Abgangsgruppe Y handelt es sich z.B. um -Cl, -Br, -F, -OSO₃H, -SSO₃H, -OCO-CH₃, -OPO₃H₂, -OCO-C₈H₅, -OSO₂-C₁-C₄-Alkyl oder -OSO₂-N(C₁-C₄-Alkyl)₂. Bevorzugt ist Y eine Gruppe der Formel -Cl, -OSO₃H, -SSO₃H, -OCO-CH₃, -OCO-C₆H₅ oder -OPO₃H₂, insbesondere -Cl, -OSO₃H oder -OCO-CH₃ und besonders bevorzugt -Cl oder -OSO₃H.

Bevorzugt sind R₄, R₆, R₁₀, R₁₅, R₁₆, R₁₇, R₁₉ und R₂₀ unabhängig voneinander Wasserstoff oder C₁-C₄-Alkyl, insbesondere Wasserstoff, Methyl oder Ethyl.

Besonders bevorzugt bedeuten R₄, R₆, R₁₀, R₁₅, R₁₆, R₁₇, R₁₉ und R₂₀ Wasserstoff.

Bevorzugt bedeuten R₅, R₇, R₁₃ und R₁₄ unabhängig voneinander Wasserstoff, C₁-C₄-Alkyl, C₁-C₄-Alkoxy, C₂-C₄-Alkanoylamino, Ureido, Sulfo oder Carboxy, insbesondere Wasserstoff, C₁-C₄-Alkyl, C₁-C₄-Alkoxy, C₂-C₄-Alkanoylamino, Ureido oder Sulfo, und R₁₁ und R₁₂ unabhängig voneinander Wasserstoff, C₁-C₄-Alkyl, C₁-C₄-Alkoxy oder Sulfo, insbesondere Wasserstoff, C₁-C₄-Alkyl oder C₁-C₄-Alkoxy.

Besonders bevorzugt sind R₅ Ureido oder C₂-C₄-Alkanoylamino, insbesondere Ureido, und R₇, R₁₁, R₁₂, R₁₃ und R₁₄ Wasserstoff.

R₈ steht bevorzugt für Wasserstoff, Sulfomethyl oder Carbamoyl, insbesondere für Wasserstoff oder Sulfomethyl und ganz besonders für Wasserstoff.

Bevorzugt steht B für einen C₂-C₆-Alkylenrest, einen gegebenenfalls durch C₁-C₄-Alkyl substituierten Methylen-cyclohexylenrest oder einen gegebenenfalls durch C₁-C₄-Alkyl, C₁-C₄-Alkoxy, Halogen oder Sulfo substituierten Phenylen oder Methylen-phenylen-methylenrest.

Besonders bevorzugt ist B ein Rest der Formel 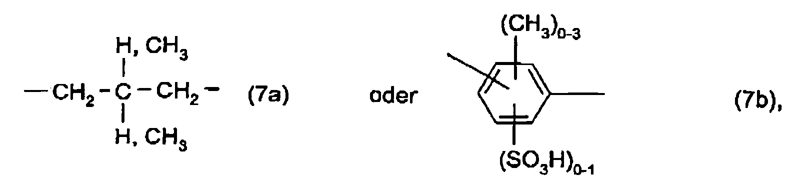 insbesondere der Formel

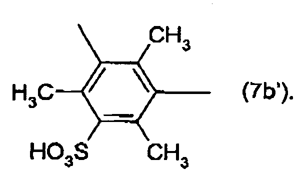

R₁₈ steht bevorzugt für Methyl, Methoxy oder Sulfo, insbesondere für Methyl oder Methoxy.

Bevorzugt bedeutet Z den Rest -CH=CH₂.

Bevorzugt stehen V₂, V₃, V₄ und V₅ unabhängig voneinander für einen Rest der Formel (6c) oder (6d), worin R₁₇, R₁₈, R₁₉, Z, m und n die oben angegebenen Bedeutungen und Bevorzugungen haben.

Bevorzugt steht k für die Zahl 2 oder 3, insbesondere 3.

Als Naphthylrest im Farbstoff der Formel (4) eignet sich bevorzugt ein Rest der Formel 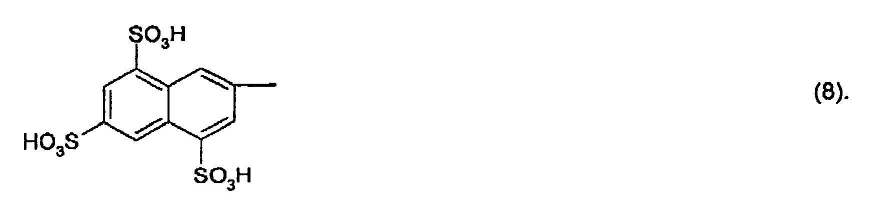
m ist bevorzugt die Zahl 0.
n bedeutet bevorzugt die Zahl 0.
Hal ist bevorzugt Brom.

Der Rest der Formel (6c) ist vorzugsweise ein Rest der Formel 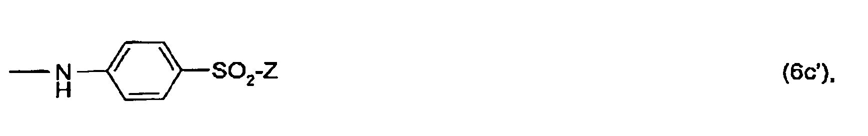 worin Z die oben angegebenen Bedeutungen und Bevorzugungen hat.

Der Rest der Formel (6d) ist vorzugsweise ein Rest der Formel 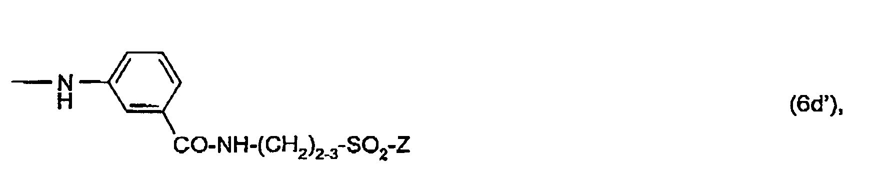 worin Z die oben angegebenen Bedeutungen und Bevorzugungen hat.

Bevorzugt ist das erfindungsgemässe Verfahren, worin im Reaktivfarbstoff der Formel (2) R₄ Wasserstoff, R₅ Ureido und V₂ einen Rest der Formel (6c) bedeuten, worin R₁₇ Wasserstoff, Z Vinyl und m die Zahl 0 sind.

Bevorzugt ist das erfindungsgemässe Verfahren, worin im Reaktivfarbstoff der Formel (3) R₆, R₇ und R₈ Wasserstoff, Rg Ethyl und V₃ einen Rest der Formel (6c) bedeuten, worin R₁₇ Wasserstoff, Z Vinyl und m die Zahl 0 sind.

Bevorzugt ist das erfindungsgemässe Verfahren, worin im Reaktivfarbstoff der Formel (4) R₁₀, R₁₁, R₁₂, R₁₃ und R₁₄ Wasserstoff, V₄ einen Rest der Formel (6d), worin R₁₉ Wasserstoff, Z Vinyl und n die Zahl 0 ist, und k die Zahl 3 bedeuten.

Bevorzugt ist das erfindungsgemässe Verfahren, worin im Reaktivfarbstoff der Formel (5) R₁₅ und R₁₆ Wasserstoff, B einen Rest der oben genannten Formel (7a) oder (7b), vorzugsweise der Formel (7b), und V₅ einen Rest der Formel (6d)bedeuten, worin R₁₉ Wasserstoff, Z Vinyl und n die Zahl 0 sind.

Als gelb- oder orangefärbender Reaktivfarbstoff eignet sich für das erfindungsgemässe Verfahren bevorzugt ein Farbstoff der Formel (3) oder (4), insbesondere der Formel (4), worin die Variablen die oben angegebenen Bedeutungen und Bevorzugungen haben.

Die Reaktivfarbstoffe der Formeln (1a), (2), (3), (4) und (5) sind bekannt oder können in Analogie zu bekannten Verbindungen, beispielsweise den in der EP-A-0826743 beschriebenen Farbstoffen, hergestellt werden.

Gegenstand der vorliegenden Erfindung sind ferner die neuen Reaktivfarbstoffe der Formel 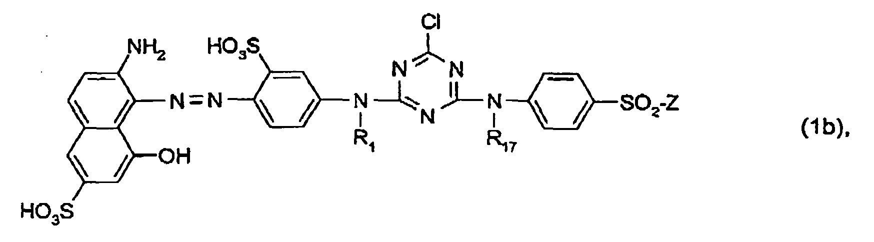 worin
R₁, R₁₇ und Z die oben angegebenen Bedeutungen und Bevorzugungen haben.

Der Reaktivfarbstoff der Formel (1b) wird erhalten indem man z.B. die Verbindungen der Formeln 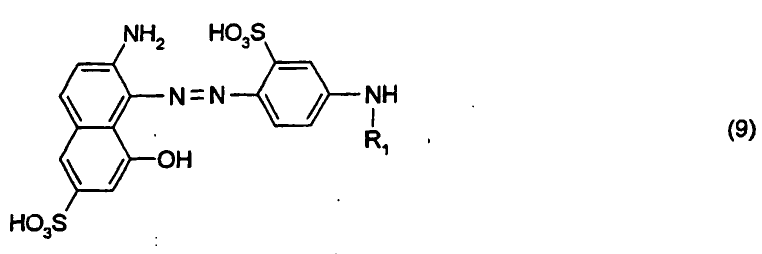 und 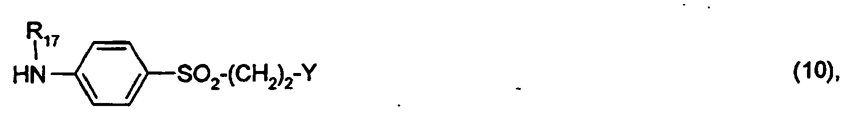 worin
R₁, R₁₇ und Y die oben angegebenen Bedeutungen und Bevorzugungen haben und Y insbesondere für Sulfato steht, mit Cyanurchlorid umsetzt und gegebenenfalls eine Eliminierungsreaktion anschliesst.

Da die einzelnen oben angegebenen Verfahrensschritte in unterschiedlicher Reihenfolge, gegebenenfalls auch gleichzeitig, ausgeführt werden können, sind verschiedene Verfahrensvarianten möglich. Im allgemeinen führt man die Umsetzung schrittweise durch, wobei sich die Reihenfolge der einfachen Reaktionen zwischen den einzelnen Reaktionskomponenten vorteilhafterweise nach den besonderen Bedingungen richtet. So wird z.B. eine Verbindung der Formel (9) mit Cyanurchlorid umgesetzt und das erhaltene Produkt anschliessend mit einer Verbindung der Formel (10) kondensiert. Vorzugsweise wird eine Verbindung Formel (10) mit Cyanurchlorid umgesetzt und das erhaltene Produkt anschliessend mit einer Verbindung der Formel (9) kondensiert.

Die einzelnen Kondensationsreaktionen erfolgen z.B. gemäss an sich bekannter Verfahren, in der Regel in wässriger Lösung, bei einer Temperatur von z.B. 0 bis 50°C, insbesondere 0 bis 10°C, und einem pH-Wert von z.B. 3 bis 10, insbesondere 3 bis 7.

Ausserdem kann im Anschluss an die Synthese eine Eliminierungsreaktion ausgeführt werden. Beispielsweise kann man Reaktivfarbstoffe der Formel (1b), welche Sulfatoethylsulfonylreste enthalten, mit einer Base, wie z.B. Natriumhydroxid, behandeln, wobei die Sulfatoethylsulfonylreste in Vinylsulfonylreste übergehen.

Die Verbindungen der Formeln (9) und (10) sind bekannt oder können in Analogie zu bekannten Verbindungen hergestellt werden.

Die in dem erfindungsgemässen Verfahren zum Trichromie-Färben oder -Bedrucken verwendeten Reaktivfarbstoffe sowie die erfindungsgemässen Reaktivfarbstoffe der Formel (1b) liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triethanolamins genannt.

Die in dem erfindungsgemässen Verfahren verwendeten Reaktivfarbstoffe sowie die erfindungsgemässen Reaktivfarbstoffe der Formel (1 b) können weitere Zusätze wie z.B. Kochsalz oder Dextrin enthalten.

Das erfindungsgemässe Verfahren zum Trichromie-Färben oder -Bedrucken sowie die erfindungsgemässen Reaktivfarbstoffe der Formel (1 b) können auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und ölabweisende Mittel sowie wasserenthärtende Mittel und natürliche oder synthetische Verdicker, wie z.B. Alginate und Celluloseäther, enthalten.

Die Mengen, in denen die einzelnen Farbstoffe in den Färbebädem oder Druckpasten verwendet werden, können je nach der gewünschten Farbtiefe in weiten Grenzen schwanken, im allgemeinen haben sich Mengen von 0,01 bis 15 Gew.-%, insbesondere 0,1 bis 10 Gew.-%, bezogen auf das Färbegut bzw. die Druckpaste, als vorteilhaft erwiesen.

Bei Teppichgeweben sind Druckverfahren, wie z.B. der Displacementdruck oder das Spacedyeing von Bedeutung.

Bevorzugt ist das Färben, welches insbesondere nach dem Ausziehverfahren durchgeführt wird und beim Teppichfärben auch nach dem kontinuierlichen Verfahren erfolgen kann.

Vorzugsweise färbt man bei einem pH-Wert von 2 bis 7, insbesondere 2,5 bis 5,5 und ganz besonders von 2,5 bis 4. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 80 bis 130°C, insbesondere 85 bis 120°C.

Zur Erhöhung der Nassechtheiten kann, zur Entfernung von allfällig nicht fixierten Farbstoffs, eine Nachbehandlung bei einem pH-Wert von z.B. 7 bis 12, insbesondere 7 bis 9, und einer Temperatur von z.B. 30 bis 100°C, insbesondere von 50 bis 80°C, durchgeführt werden. In vorteilhafter Weise kann bei intensiven Farbtönen, z.B. bei sehr tiefen Färbungen, insbesondere auf Fasermischungen, der nicht fixierte Farbstoff reduktiv, durch Zusatz eines Reduktionsmittels ins alkalische Nachbehandlungsbad, z.B. Hydrosulfit, wie beispielsweise Natriumhydrosulfit, entfernt werden. Die im Polyamidfasermaterial fixierten Anteile des Farbstoffs werden durch die Behandlung nicht angegriffen. Das Reduktionsmittel setzt man vorteilhaft in einer Menge von z.B. 0,1 bis 6 Gew-%, insbesondere 0,5 bis 5 Gew.-%, bezogen auf das Gewicht des Nachbehandlungsbades, zu.

Die in dem erfindungsgemässen Verfahren verwendeten Reaktivfarbstoffe sowie die erfindungsgemässen Reaktivfarbstoffe der Formel (1 b) zeichnen sich beim Trichromie-Färben oder -Bedrucken durch gleichmässigen Farbaufbau, gutes Aufzieh- und Fixierverhalten, gute Nuancenkonstanz auch in verschiedenen Konzentrationen, gute Echtheiten sowie insbesondere durch sehr gute Kombinierbarkeit aus.

Das erfindungsgemässe Trichromie-Verfahren sowie die erfindungsgemässen Reaktivfarbstoffe der Formel (1b) eignen sich zum Färben oder Bedrucken von synthetischen Polyamidfasermaterialien, wie z.B. Polyamid-6 (Poly-ε-caprolactam), Polyamid-6,6 (Polyhexamethylenadipinsäureamid), Polyamid-7, Polyamid-6,12 (Polyhexamethylendodecansäureamid), Polyamid-11 oder Polyamid-12, Copolyamiden mit Polyamid-6,6 oder Polyamid-6, wie z.B. Polymere aus Hexamethylendiamin, ε-Caprolactam und Adipinsäure und Polymere aus Adipinsäure, Hexamethylendiamin und Isophthalsäure oder aus Adipinsäure, Hexamethylendiamin und 2-Methylpentamethylendiamin oder 2-Ethyltetramethylendiamin, und sind ferner geeignet zum Färben oder Bedrucken von Mischgeweben oder -Gamen aus synthetischem Polyamid und Wolle.

Das erfindungsgemässe Verfahren sowie die erfindungsgemässen Reaktivfarbstoffe eignen sich vorteilhaft auch zum Färben oder Bedrucken von Mikrofasern aus synthetischen Polyamiden. Unter Mikrofasern versteht man Fasermaterialien, die aus Fäden mit einer individuellen Fadenfeinheit unterhalb von 1 denier (1,1 dTex) aufgebaut sind. Solche Mikrofasern sind bekannt und werden üblicherweise durch Schmelzspinnen hergestellt.

Die erfindungsgemässen Reaktivfarbstoffe der Formel (1b) eignen sich auch zum Färben oder Bedrucken von natürlichen Polyamidfasermaterialien wie z.B. Wolle oder Seide, insbesondere von Wolle und waschmaschinenfest-ausgerüsteter Wolle.

Bevorzugt ist das Färben oder Bedrucken von synthetischen Polyamidfasermaterialien.

Das genannte Textilmaterial kann dabei in den verschiedensten Verarbeitungsformen vorliegen, wie z.B. als Faser, Garn, Gewebe oder Gewirke und in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1:

a) 7 Teile einer Verbindung, welche in Form der freien Säure der Formel 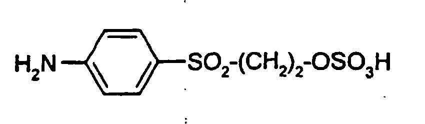 entspricht, werden in 100 Teilen Wasser verrührt, durch Zugabe von 0,35 Teilen Na₂HPO₄-12H₂O auf einen pH-Wert von 6 gestellt und auf eine Temperatur von 0°C abgekühlt. Zu der so erhaltenen Suspension lässt man innerhalb von 10 bis 15 Minuten eine Lösung aus 4,85 Teilen Cyanurchlorid und 50 Teilen Aceton zutropfen, wobei der pH durch Zugabe wässriger Natriumhydroxidlösung bei einem Wert von 3 gehalten wird. Es wird eine Stunde bei einer Temperatur von 0 bis 2°C und einem pH-Wert von 3 nachgerührt. Nach Zugabe von Natriumchlorid wird eine weitere Stunde nachgerührt.
b) 7,5 Teile einer Verbindung, welche in Form der freien Säure der Formel 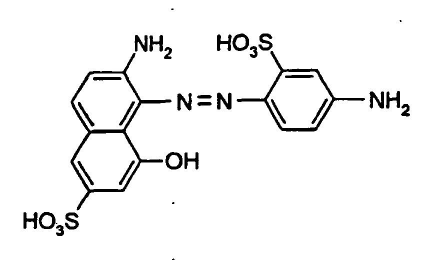 entspricht, werden in 100 Teilen Wasser und 11,1 Teilen 1-N Natriumhydroxidlösung bei Raumtemperatur und einem pH-Wert von 5,5 gelöst. Diese Lösung wird anschliessend innerhalb von 45 Minuten zu der gemäss a) erhaltenen Lösung getropft. Während der Zugabe wird der pH durch Zugabe wässriger Natriumhydrogencarbonatlösung bei einem Wert von 5,8 bis 6 gehalten. Es wird 90 Minuten bei Raumtemperatur und einem pH-Wert von 5,8 bis 6 nachgerührt. Anschliessend wird der Farbstoff abfiltriert, mit 10%-iger, wässriger Natriumchloridlösung nachgewaschen und bei einer Temperatur von 30 bis 35°C getrocknet.
c) Zur Überführung des gemäss b) erhaltenen Farbstoffs in die Vinylsulfonform wird eine wässrige Lösung dieses Farbstoffs mit Trinatriumphosphat auf pH 10 gestellt und 30 Minuten bei Raumtemperatur gerührt. Der pH wird laufend kontrolliert und gegebenenfalls korrigiert. Das Ende der Reaktion zeigt sich dadurch an, dass der pH konstant bleibt. Man erhält einen Farbstoff, welcher in Form der freien Säure der Verbindung der Formel 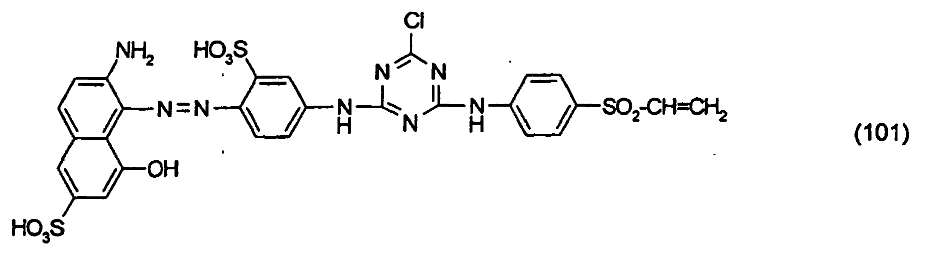 entspricht. Der Farbstoff der Formel (101) färbt Wolle, Seide und synthetisches Polyamidfasermaterial in roten Farbtönen.

### Verfahrensbeispiel 1:

Ein Polyamid-6,6-Teppichgewebe wird kontinuierlich aus einem Färbebad gefärbt, welches auf 1000 Teile des Färbebads
0,28 Teile des rotfärbenden Farbstoffs der Formel 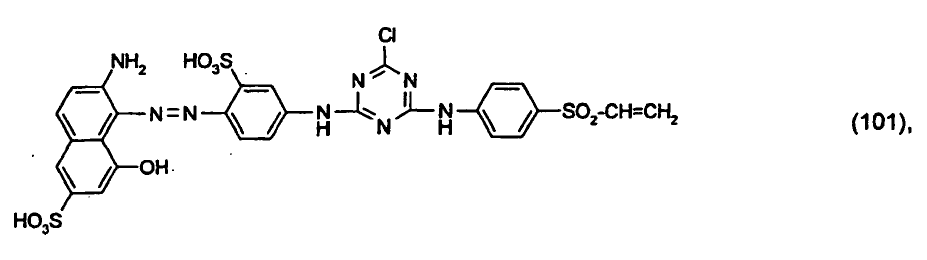 0,8 Teile des gelbfärbenden Farbstoffs der Formel 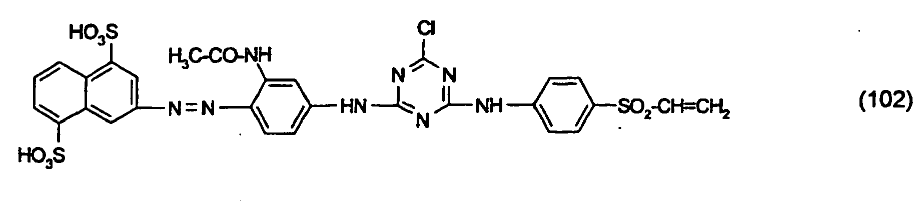 und
0,46 Teile des blaufärbenden Farbstoffs der Formel 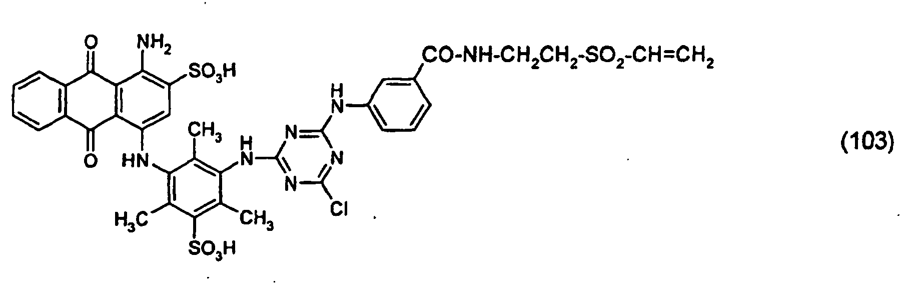 und weiterhin 1,0 Teile eines handelsüblichen Verdickungsmittels, 3,0 Teile eines handelsüblichen Frostschutzmittels, 1,0 Teile eines nicht-ionischen Netzmittels und die erforderliche Menge Zitronensäure enthält, so dass der pH des Färbebads 5,5 beträgt. Das Teppichgewebe wird anschliessend für 5 Minuten bei 100°C im Wasserdampf fixiert, in üblicher Weise gewaschen und getrocknet. Das Teppichgewebe zeichnet sich durch eine gleichmässige, dunkelbraune Färbung von guten Echtheiten aus.

Verfahrensbeispiele 2 und 3: Verfährt man wie in Beispiel 1 angegeben, verwendet jedoch anstelle von 0,28 Teilen des rotfärbenden Farbstoffs der Formel (101), 0,8 Teilen des gelbfärbenden Farbstoffs der Formel (102) und 0,46 Teilen des blaufärbenden Farbstoffs der Formel (103) die in der folgenden Tabelle 1 in Spalte 2 angegebenen Reaktivfarbstoffe in den dort angegebenen Mengen, so werden ebenfalls braune Färbungen erhalten, die sich durch gute Egalitäten und gute Echtheiten auszeichnen.

**Tabelle 1**

| Bsp. Farbstoffe | |
|---|---|
| 2 | 0,45 Teile des rotfärbenden Farbstoffs der Formel (101), |
| | 0,40 Teile des blaufärbenden Farbstoffs der Formel (103) und |
| | 0,70 Teile des gelbfärbenden Farbstoffs der Formel |
| 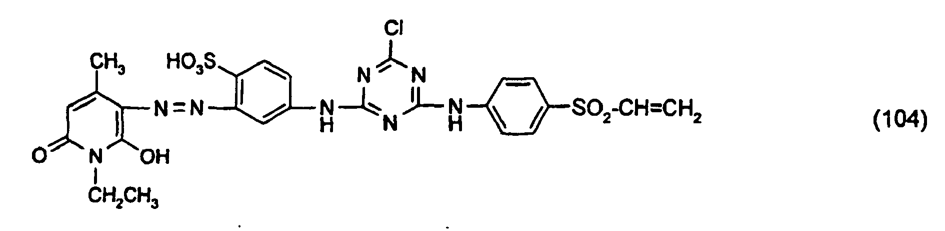 | |
| 3 | 0,45 Teile des rotfärbenden Farbstoffs der Formel (101), |
| | 0,40 Teile des blaufärbenden Farbstoffs der Formel (103) und |
| | 0,42 Teile des gelbfärbenden Farbstoffs der Formel |
| 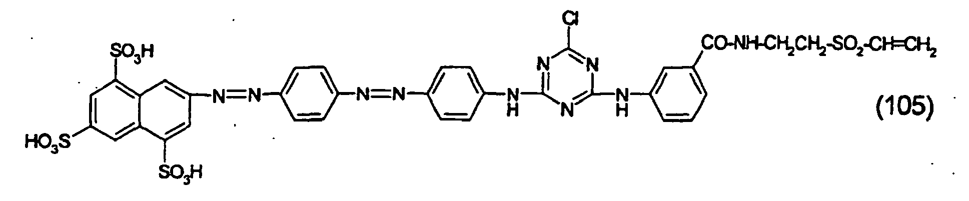 | |

Verfahrensbeispiel 3: 100 kg texturiertes Polyamid-6,6-Trikot werden in einem Färbeapparat mit 2000 I Flotte, welche 4 kg Essigsäure, 0.5 kg Netzmittel, 1 kg eines Egalisiermittels enthält während 10 min bei 40°C behandelt. Der pH der Flotte beträgt 3.4. Danach werden, vorgelöst in einer geringen Menge Wasser, 430 g des Farbstoffes der Formel (102), 300 g des Farbstoffs der Formel (101) und 330 g des Farbstoffs der Formel (103) zugegeben.
Das zu färbende Material wird in der Färbeflotte 5 min bei 40°C behandelt und dann mit einer Aufheizrate von 1 °C/min auf 98°C erwärmt und dort 60 min gefärbt. Die Färbung wird wie üblich fertiggestellt. Man erhält eine egale Färbung mit sehr guten Echtheitseigenschaften.

Verfahrensbeispiel 4: 70 kg eines Gewebes aus Polyamid-6,6-Microfaser werden in einem Färbeapparat mit 1500 I Flotte, welche 3 kg Ameisensäure, 0.4 kg Netzmittel, 0.7 kg eines Egalisiermittels enthält während 10 min bei 40°C behandelt. Der pH der Flotte beträgt 2.9. Dannach werden, vorgelöst in einer geringen Menge Wasser, 700 g des Farbstoffes der Formel (102), 1300 g des Farbstoffs der Formel (101) und 430 g des Farbstoffs der Formel (103) zugegeben. Das zu färbende Material wird in der Färbeflotte 5 min bei 40°C behandelt und dann mit einer Aufheizrate von 1 °C/min auf 110°C erwärmt und dort 60 min gefärbt. Nach dem Färben wird eine alkalische Nachbehandlung zur Verbesserung der Nassechtheiten angeschlossen. Dazu wird auf frischem Bad, das 2 g/l Soda enthält und einen pH von 9.2 aufweist, die Färbung 20 min bei 60°C behandelt. Dann wird wie üblich gespült und fertiggestellt. Man erhält eine egale Färbung mit ausgezeichneten Echtheitseigenschaften.

Verfahrensbeispiel 5: Es wird wie in Verfahrensbeispiel 4 beschrieben verfahren, wobei die alkalische Nachbehandlung jedoch bei 70°C anstatt bei 60°C durchgeführt wird.

Verfahrensbeispiel 6: Es wird wie in Verfahrensbeispiel 4 beschrieben verfahren, wobei jedoch die alkalische Nachbehandlung in einem Bad durchgeführt wird, das 5 g/l Soda und 5g/l Hydrosulfit enthält. Die Färbung wird 20 min bei 70°C mit diesem Bad behandelt.

### Verfahrensbeispiel 7 (Space dyeing):

Ein Teppich aus Polyamid-6-Gam wird zunächst mit einer Flotte geklotzt, die auf 1000 Teile der Flotte die nachfolgend angegebenen Komponenten enthält:
0,01 Teile des gelbfärbenden Farbstoffs der Formel (102)
0,003 Teile des rotfärbenden Farbstoffs der Formel (101),
0,008 Teile des blaufärbenden Farbstoffs der Formel (103),
3,00 Teile eines handelsüblichen Verdickungsmittels,
2,00 Teile eines handelsüblichen, nicht-ionischen Netzmittels,
1,00 Teile eines handelsüblichen Frostschutzmittels, wobei
der pH mit der erforderlichen Menge Zitronensäure auf 5 eingestellt wird.
Anschliessend wird der gefärbte Teppich teilweise mit einer Druckpaste bedruckt, die auf 1000 Teile der Druckpaste die nachfolgend angegebenen Komponenten enthält:
0,50 Teile des rotfärbenden Farbstoffs der Formel (101),
0,50 Teile des blaufärbenden Farbstoffs der Formel (103),
15,0 Teile eines handelsüblichen Verdickungsmittels,
2,00 Teile eines handelsüblichen, nicht-ionischen Netzmittels,
1,00 Teile eines handelsüblichen Frostschutzmittels, wobei
der pH mit der erforderlichen Menge Zitronensäure auf 5 eingestellt wird.
Der gefärbte und teilweise bedruckte Teppich wird dann mit gesättigtem Wasserdampf 5 Minuten bei 100°C behandelt, in üblicher Weise gewaschen und getrocknet. Auf diese Weise wird ein Teppich erhalten, welcher rot bedruckte Bereiche auf einem beigefarbenen Hintergrund aufweist, die sich durch eine gute Egalität mit guten Echtheitseigenschaften auszeichnen.

Verfahrensbeispiel 8 (Kontinuierliches Färben): Ein Teppich aus Polyamid-6,6-Garn wird mit einer Flotte kontinuierlich gefärbt, die auf 1000 Teile der Flotte die nachfolgend angegebenen Komponenten enthält:
0,8 Teile des gelbfärbenden Farbstoffs der Formel (102)
0,28 Teile des rotfärbenden Farbstoffs der Formel (101),
0,46 Teile des blaufärbenden Farbstoffs der Formel (103),
1,00 Teile eines handelsüblichen Verdickungsmittels,
1,00 Teile eines handelsüblichen, nicht-ionischen Netzmittels,
3,00 Teile eines handelsüblichen Frostschutzmittels, wobei
der pH mit der erforderlichen Menge Zitronensäure auf 5,5 eingestellt wird. Das gefärbte Teppichgewebe wird anschliessend mit gesättigtem Wasserdampf 5 Minuten bei 100°C behandelt, in üblicher Weise gewaschen und getrocknet. Der auf diese Weise erhaltene Teppich zeichnet sich durch eine egale dunkelbraune Färbung mit sehr guten Echtheitseigenschaften aus.

### Verfahrensbeispiel 9 (Displacementdruck):

Ein Teppich aus Polyamid-6,6-Gam wird zunächst mit verschiedenen Druckpasten bedruckt, welche die nachfolgend angegebenen Komponenten zum Teil in variierenden Mengen x, y und z enthalten:
x Teile Tectilon^{®} Gelb 3R (Ciba Specialty Chemicals),
y Teile Tectilon^{®} Rot 2B (Ciba Specialty Chemicals),
z Teile Tectilon^{®} Blau 4R-01 (Ciba Specialty Chemicals),
x steht z.B. für 1,05, y für 0,34 und z für 1,01,
15,0 Teile eines handelsüblichen Verdickungsmittels,
10,0 Teile Lyoprint^{®} MP
2,00 Teile eines handelsüblichen, nicht-ionischen Netzmittels,
1,00 Teile eines handelsüblichen Frostschutzmittels, wobei
der pH mit der erforderlichen Menge Zitronensäure auf 4 eingestellt wird.

Anschliessend wird der bedruckte Teppich mit einer Flotte gefärbt, die auf 1000 Teile der Flotte die nachfolgend angegebenen Komponenten enthält (Die Flottenaufnahme beträgt 350%):
1,26 Teile des gelbfärbenden Farbstoffs der Formel (102)
0,62 Teile des rotfärbenden Farbstoffs der Formel (101),
1,90 Teile des blaufärbenden Farbstoffs der Formel (103),
1,00 Teile eines handelsüblichen Verdickungsmittels,
2,00 Teile eines handelsüblichen, nicht-ionischen Netzmittels,
2,00 Teile eines handelsüblichen Frostschutzmittels, wobei
der pH mit der erforderlichen Menge Zitronensäure auf 5,5 eingestellt wird.
Der Teppich wird dann mit gesättigtem Wasserdampf 5 Minuten bei 100°C behandelt, in üblicher Weise gewaschen und getrocknet. Auf diese Weise wird ein Teppich erhalten, welcher bunte Bereiche auf einem dunkel-violetten Hintergrund aufweist, die sich durch eine gute Egalität mit guten Echtheitseigenschaften auszeichnen.

## Patentansprüche

1. Verfahren zum Trichromie-Färben oder Bedrucken von synthetischem Polyamidfasermaterial, worin man mindestens einen rotfärbenden Reaktivfarbstoff der Formel 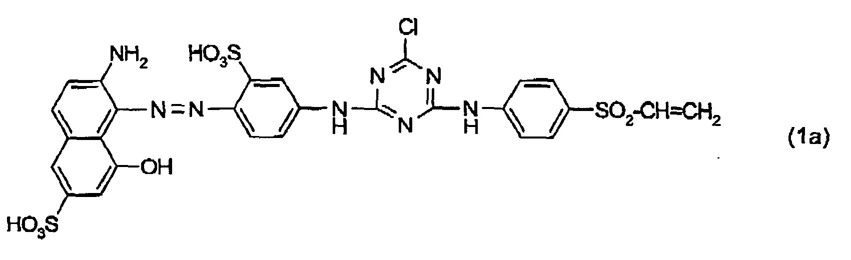 zusammen mit mindestens einem der gelb- oder orangefärbenden Reaktivfarbstoffe der Formeln 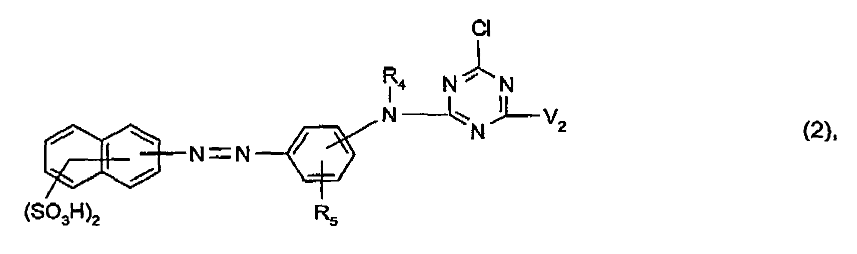 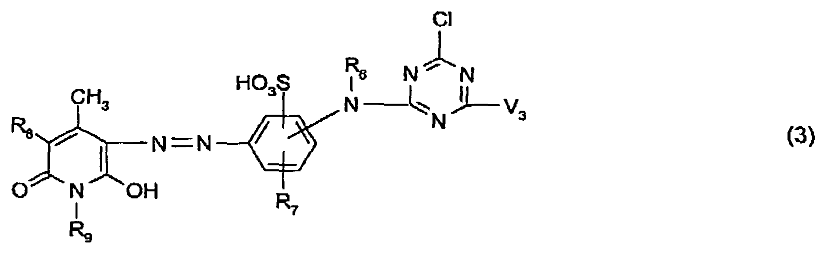 und 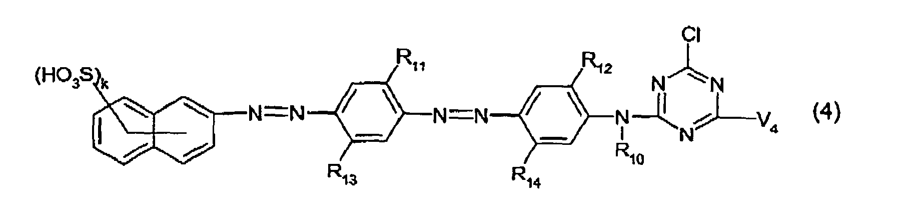 und mindestens einem blaufärbenden Reaktivfarbstoff der Formel 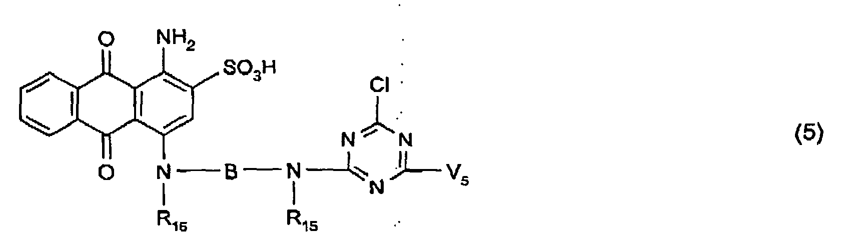 verwendet, worin
R₄, R₆, R₁₀, R₁₅ und R₁₆ unabhängig voneinander Wasserstoff, unsubstituiertes oder durch Hydroxy, Sulfo, Sulfato, Carboxy oder Cyano substituiertes C₁-C₄-Alkyl bedeuten,
R₅, R₇, R₁₃ und R₁₄ unabhängig voneinander Wasserstoff, C₁-C₄-Alkyl, C₁-C₄-Alkoxy, C₂-C₄-Alkanoylamino, Ureido, Sulfamoyl, Halogen, Sulfo oder Carboxy sind,
R₈ für Wasserstoff, Sulfomethyl, Carbamoyl oder Cyano steht,
R₉ C₁-C₄-Alkyl ist,
R₁₁ und R₁₂ unabhängig voneinander Wasserstoff, C₁-C₄-Alkyl, C₁-C₄-Alkoxy, Halogen, Sulfo oder Carboxy sind,
B ein C₂-C₈-Alkylenrest, welcher durch 1, 2 oder 3 Glieder -O- unterbrochen sein kann und unsubstituiert oder durch Hydroxy oder Sulfato substituiert ist, oder
ein gegebenenfalls durch C₁-C₄-Alkyl substituierter Cyclohexylenrest oder Methylen-cyclohexylenrest, oder
ein gegebenenfalls durch C₁-C₄-Alkyl, C₁-C₄-Alkoxy, Halogen oder Sulfo substituierter Phenylen oder Methylen-phenylen-methylenrest ist,
I die Zahl 0 oder 1 bedeutet,
k die Zahl 1, 2 oder 3 ist, und
V₂, V₃, V₄ und V₅ unabhängig voneinander für einen Rest der Formel
-NH-(CH₂)₂₋₃-SO₂Z (6a),
-NH-(CH₂)₂₋₃-O-(CH₂)₂₋₃-SO₂-Z (6b), 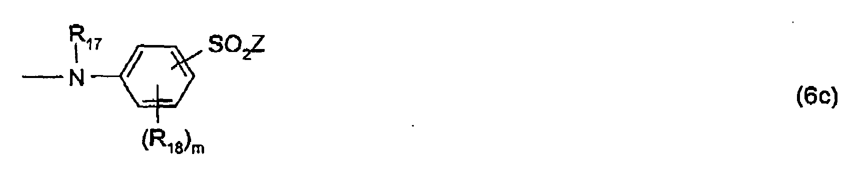
oder 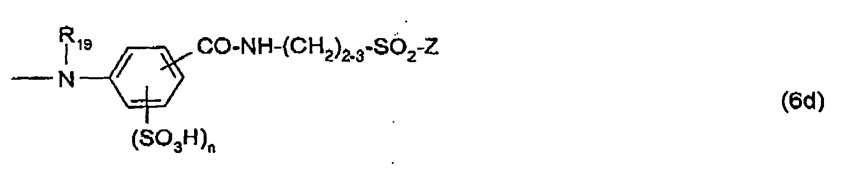 stehen, worin
R₁₇ und R₁₉ unabhängig voneinander Wasserstoff, unsubstituiertes oder durch Hydroxy, Sulfo, Sulfato, Carboxy oder Cyano substituiertes C₁-C₄-Alkyl bedeuten,
R₁₈ C₁-C₄-Alkyl, C₁-C₄-Alkoxy, Halogen oder Sulfo ist,
Z der Rest -CH=CH₂ oder -CH₂-CH₂-Y und Y eine Abgangsgruppe bedeutet,
m die Zahl 0, 1 oder 2 ist,
n für die Zahl 0 oder 1 steht,
oder V₂, V₃, V₄ und V₅ unabhängig voneinander für einen Rest der Formel 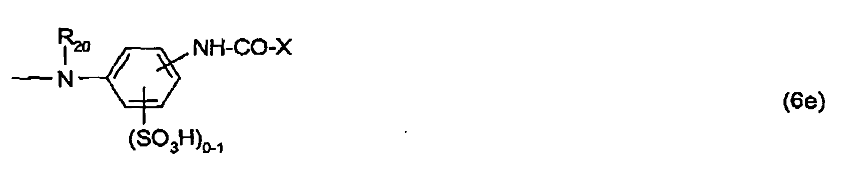 stehen, worin
R₂₀ Wasserstoff, unsubstituiertes oder durch Hydroxy, Sulfo, Sutfato, Carboxy oder Cyano substituiertes C₁-C₄-Alkyl bedeutet, und
X der Rest 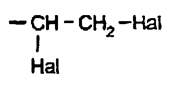 oder 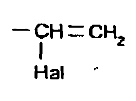 und Hal Brom oder Chlor ist,

2. Verfahren gemäss Anspruch 1, **dadurch gekennzeichnet, dass**
R₄, R₆, R₁₀, R₁₅, R₁₆, R₁₇, R₁₉ und R₂₀ Wasserstoff bedeuten.

3. Verfahren gemäss einem der Ansprüche 1 und 2, **dadurch gekennzeichnet, dass**
R₅, R₇, R₁₃ und R₁₄ unabhängig voneinander Wasserstoff, C₁-C₄-Alkyl, C₁-C₄-Alkoxy, C₂-C₄-Alkanoylamino, Ureido, Sulfo oder Carboxy sind und
R₁₁ und R₁₂ unabhängig voneinander Wasserstoff, C₁-C₄-Alkyl, C₁-C₄-Alkoxy oder Sulfo bedeuten.

4. Verfahren gemäss einem der Ansprüche 1 bis 3, **dadurch gekennzeichnet, dass**
R₈ für Wasserstoff, Sulfomethyl oder Carbamoyl, insbesondere für Wasserstoff, steht.

5. Verfahren gemäss einem der Ansprüche 1 bis 4, **dadurch gekennzeichnet, dass**
B ein C₂-C₆-Alkylenrest, ein gegebenenfalls durch C₁-C₄-Alkyl substituierter Methylen-cyclohexylenrest oder ein gegebenenfalls durch C₁-C₄-Alkyl, C₁-C₄-Alkoxy, Halogen oder Sulfo substituierter Phenylen oder Methylen-phenylen-methylenrest ist.

6. Verfahren gemäss einem der Ansprüche 1 bis 5, **dadurch gekennzeichnet, dass** B ein Rest der Formel 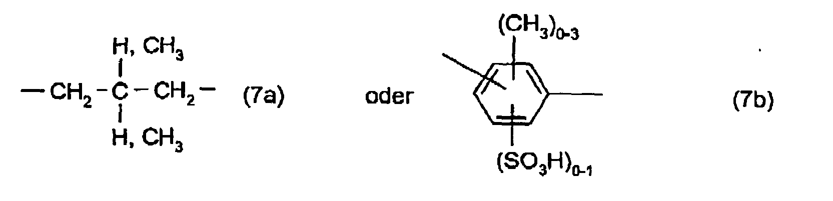 ist.

7. Verfahren gemäss einem der Ansprüche 1 bis 6, **dadurch gekennzeichnet, dass**
V₂, V₃, V₄ und V₅ unabhängig voneinander für einen Rest der Formel (6c) oder (6d) stehen, worin R₁₇, R₁₈, R₁₉, Z, m und n die in Anspruch 1 angegebenen Bedeutungen haben.

8. Verfahren gemäss einem der Ansprüche 1 bis 7, **dadurch gekennzeichnet, dass**
m für die Zahl 0 steht.

9. Verfahren gemäss einem der Ansprüche 1 bis 8, **dadurch gekennzeichnet, dass**
n für die Zahl 0 steht.

10. Verfahren gemäss einem der Ansprüche 1 bis 19, **dadurch gekennzeichnet, dass** eine Nachbehandlung bei einem pH-Wert von 7 bis 12 und einer Temperatur von 30 bis 100°C durchgeführt wird.

11. Verfahren gemäss Anspruch 10, **dadurch gekennzeichnet**, **das**
dem Nachbehandlungsbad ein Reduktionsmittel, insbesondere Hydrosulfit, zugesetzt wird.

12. Reaktivfarbstoff der Formel 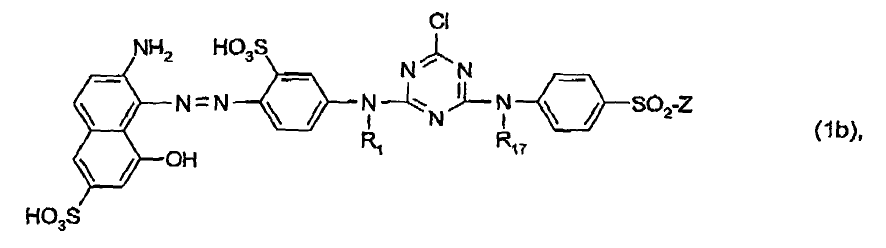 worin
R₁ und R₁₇ unabhängig voneinander Wasserstoff, unsubstituiertes oder durch Hydroxy, Sulfo, Sulfato, Carboxy oder Cyano substituiertes C₁-C₄-Alkyl bedeuten, und
Z der Rest -CH=CH₂ oder -CH₂-CH₂-Y und Y eine Abgangsgruppe ist.

13. Verwendung eines Reaktivfarbstoffes der Formel (1b) gemäss Anspruch 12 zum Färben oder Bedrucken von natürlichem oder synthetischem Polyamidfasermaterial.

14. Verwendung eines Reaktivfarbstoffs der Formel (1b) gemäss Anspruch 12 zum Färben oder Bedrucken von synthetischem Polyamidfasermaterial.

## Claims

1. A method for the trichromatic dyeing or printing of synthetic polyamide fibre material, in which at least one red reactive dye of formula 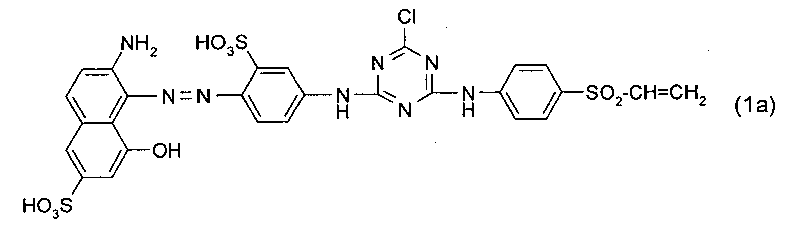 is used together with at least one of the yellow or orange reactive dyes of formulae 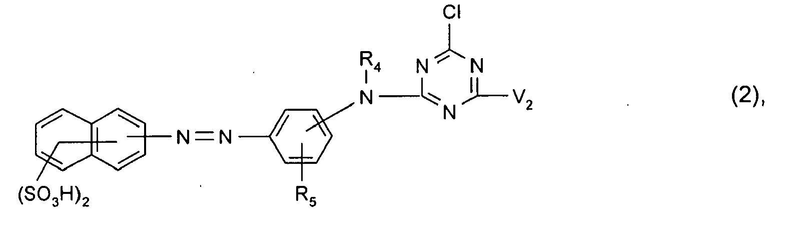 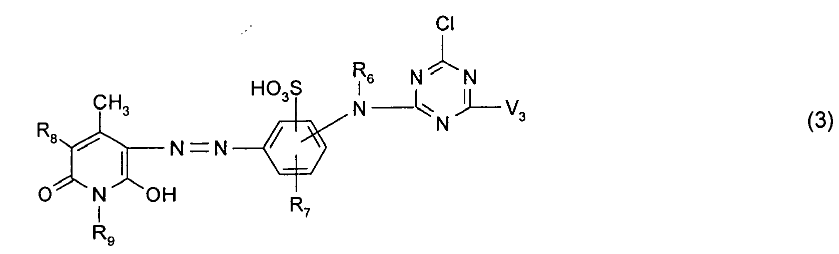 and 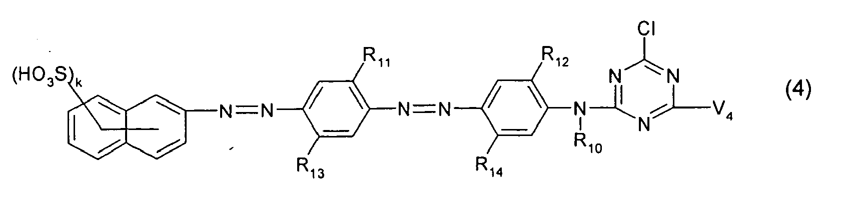 and at least one blue reactive dye of formula 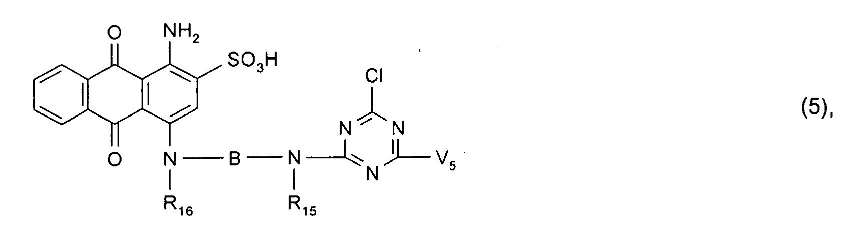 in which formulae
R₄, R₆, R₁₀, R₁₅ and R₁₆ are each independently of the others hydrogen, or C₁-C₄alkyl unsubstituted or substituted by hydroxy, sulfo, sulfato, carboxy or by cyano,
R₅, R₇, R₁₃ and R₁₄ are each independently of the others hydrogen, C₁-C₄alkyl, C₁-C₄alkoxy, C₂-C₄alkanoylamino, ureido, sulfamoyl, halogen, sulfo or carboxy,
R₈ is hydrogen, sulfomethyl, carbamoyl or cyano,
R₉ is C₁-C₄alkyl,
R₁₁ and R₁₂ are each independently of the other hydrogen, C₁-C₄alkyl, C₁-C₄alkoxy, halogen, sulfo or carboxy,
B is a C₂-C₆alkylene radical, which may be interrupted by 1, 2 or 3 -O- members and which is unsubstituted or substituted by hydroxy or by sulfato, or
a cyclohexylene radical or methylene-cyclohexylene radical each of which is unsubstituted or substituted by C₁-C₄alkyl, or
a phenylene or methylene-phenylene-methylene radical each of which is unsubstituted or substituted by C₁-C₄alkyl, C₁-C₄alkoxy, halogen or by sulfo,
I is the number 0 or 1,
k is the number 1, 2 or 3, and
V₂, V₃, V₄ and V₅ are each independently of the others a radical of formula
-NH-(CH₂)₂₋₃-SO₂Z (6a),
-NH-(CH₂)₂₋₃-O-(CH₂)₂₋₃-SO₂Z (6b), 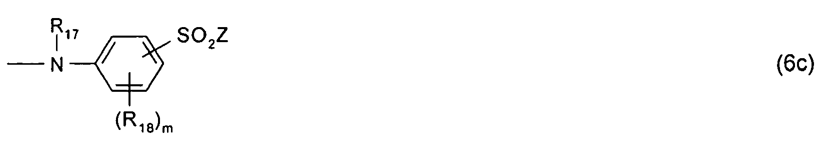
or 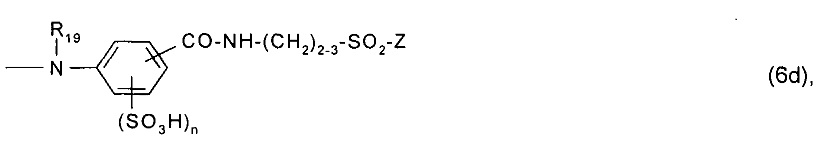
in which formulae
R₁₇ and R₁₉ are each independently of the other hydrogen, or C₁-C₄alkyl unsubstituted or substituted by hydroxy, sulfo, sulfato, carboxy or by cyano,
R₁₈ is C₁-C₄alkyl, C₁-C₄alkoxy, halogen or sulfo,
Z is the radical -CH=CH₂ or -CH₂-CH₂-Y and Y is a leaving group,
m is the number 0, 1 or 2,
n is the number 0 or 1,
or V₂, V₃, V₄ and V₅ are each independently of the others a radical of formula 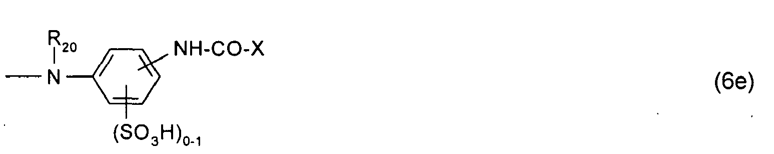 wherein
R₂₀ is hydrogen, or C₁-C₄alkyl unsubstituted or substituted by hydroxy, sulfo, sulfato, carboxy or by cyano, and
X is a radical 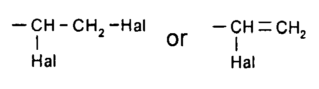 and Hal is bromine or chlorine.

2. A method according to claim 1, wherein
R₄, R₆, R₁₀, R₁₅, R₁₆, R₁₇, R₁₉ and R₂₀ are each hydrogen.

3. A method according to either claim 1 or claim 2, wherein
R₅, R₇, R₁₃ and R₁₄ are each independently of the others hydrogen, C₁-C₄alkyl, C₁-C₄alkoxy, C₂-C₄alkanoylamino, ureido, sulfo or carboxy, and
R₁₁ and R₁₂ are each independently of the other hydrogen, C₁-C₄alkyl, C₁-C₄alkoxy or sulfo.

4. A method according to any one of claims 1 to 3, wherein
R₈ is hydrogen, sulfomethyl or carbamoyl, especially hydrogen.

5. A method according to any one of claims 1 to 4, wherein
B is a C₂-C₆alkylene radical, a methylene-cyclohexylene radical unsubstituted or substituted by C₁-C₄alkyl, or a phenylene or methylene-phenylene-methylene radical each of which is unsubstituted or substituted by C₁-C₄alkyl, C₁-C₄alkoxy, halogen or by sulfo.

6. A method according to any one of claims 1 to 5, wherein
B is a radical of formula

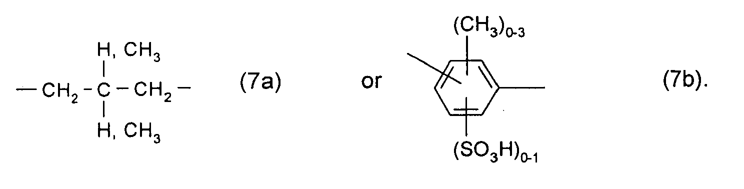

7. A method according to any one of claims 1 to 6, wherein
V₂, V₃, V₄ and V₅ are each independently of the others a radical of formula (6c) or (6d) in which R₁₇, R₁₈, R₁₉, Z, m and n are as defined in claim 1.

8. A method according to any one of claims 1 to 7, wherein
m is the number 0.

9. A method according to any one of claims 1 to 8, wherein
n is the number 0.

10. A method according to any one of claims 1 to 19, wherein an aftertreatment is carried out at a pH value of from 7 to 12 and a temperature of from 30 to 100°C.

11. A method according to claim 10, wherein
a reducing agent, especially hydrosulfite, is added to the aftertreatment bath.

12. A reactive dye of formula 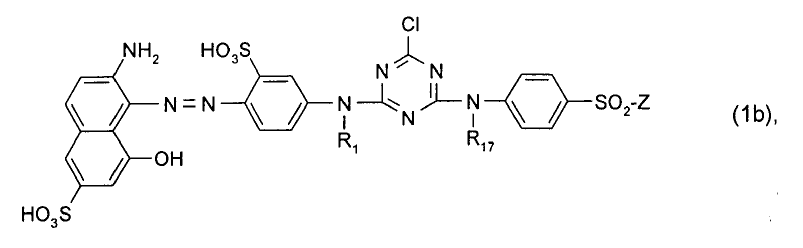 wherein
R₁ and R₁₇ are each independently of the other hydrogen, or C₁-C₄alkyl unsubstituted or substituted by hydroxy, sulfo, sulfato, carboxy or by cyano and
Z is the radical -CH=CH₂ or -CH₂-CH₂-Y and Y is a leaving group.

13. Use of a reactive dye of formula (1 b) according to claim 12 for dyeing or printing natural or synthetic polyamide fibre material.

14. Use of a reactive dye of formula (1 b) according to claim 12 for dyeing or printing synthetic polyamide fibre material.

## Revendications

1. Procédé pour la teinture ou l'impression en trichromie de matière fibreuse polyamide synthétique, dans lequel on utilise au moins un colorant réactif qui teint de rouge de formule 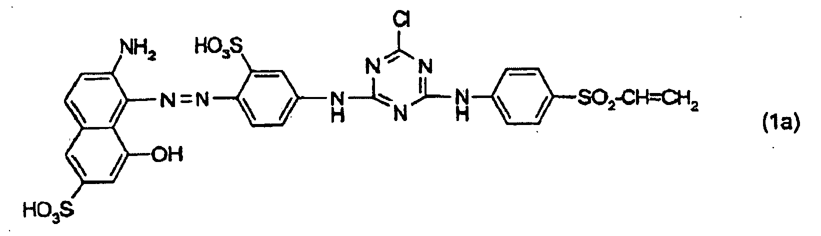 conjointement avec des colorants réactifs qui teignent de jaune ou d'orange des formules 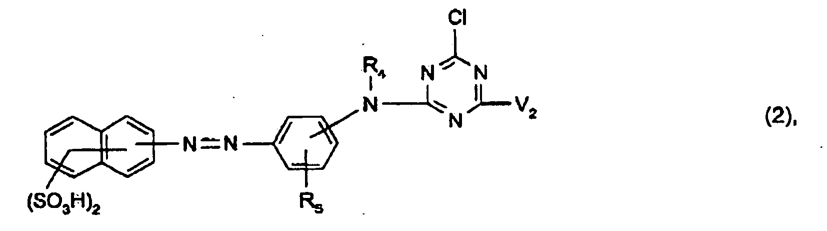 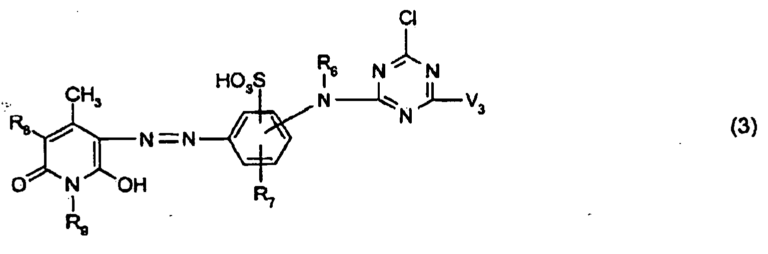 et 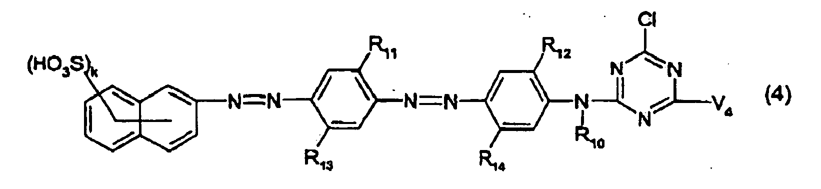 et au moins un colorant réactif qui teint de bleu de formule 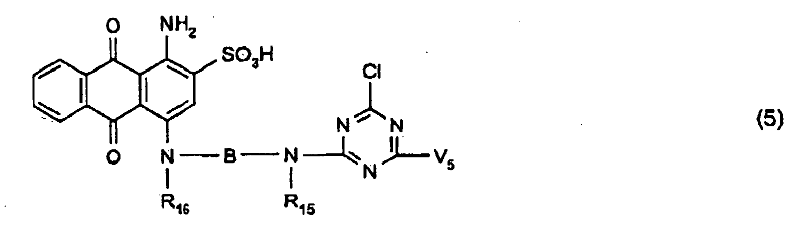 où
R₄, R₆, R₁₀, R₁₅ et R₁₆, indépendamment les uns des autres, représentent un atome d'hydrogène, un groupe alkyle en C₁-C₄ non substitué ou substitué par un substituant hydroxy, sulfo, sulfato, carboxy ou cyano,
R₅, R₇, R₁₃ et R₁₄, indépendamment les uns des autres, représentent un atome d'hydrogène, un groupe alkyle en C₁-C₄, alkoxy en C₁-C₄, (alcanoyl en C₂-C₄)amino, uréido, sulfamoyle, halogène, sulfo ou carboxy,
R₈ représente un atome d'hydrogène, un groupe sulfométhyle, carbamoyle ou cyano,
R₉ représente un groupe alkyle en C₁-C₄,
R₁₁ et R₁₂ indépendamment l'un de l'autre, représentent un atome d'hydrogène, un groupe alkyle en C₁-C₄, alkoxy en C₁-C₄, halogène, sulfo ou carboxy,
B représente un reste alkylène en C₂-C₈, qui peut être interrompu par 1, 2 ou 3 membres -O- et non substitué ou substitué par un substituant hydroxy ou sulfato, ou
un reste cyclohexylène ou un reste méthylène-cyclohexylène éventuellement substitué par un substituant alkyle en C₁-C₄,
un reste phénylène ou méthylène-phénylène-méthylène éventuellement substitué par un substituant alkyle en C₁-C₄, alkoxy en C₁-C₄, halogène ou sulfo,
1 vaut 0 ou 1,
k vaut 1, 2 ou 3, et
V₂, V₃, V₄ et V₅, indépendamment les uns des autres, représentent un reste de formule
-NH-(CH₂)₂₋₃-SO₂Z (6a),
-NH-(CH₂)₂₋₃-O-(CH₂)₂₋₃-SO₂Z (6b), 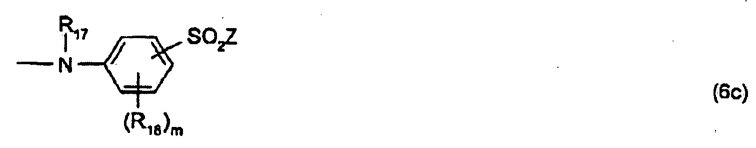
ou 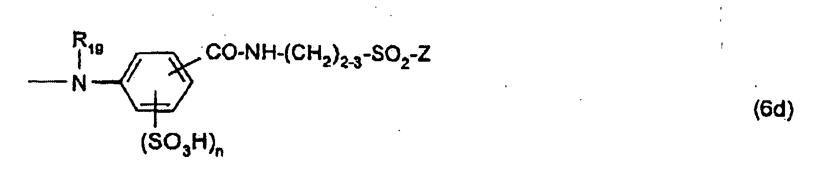 dans lesquelles
R₁₇ et R₁₉, indépendamment l'un de l'autre, représentent un atome d'hydrogène, un groupe alkyle en C₁-C₄ non substitué ou substitué par un substituant hydroxy, sulfo, sulfato, carboxy ou cyano,
R₁₈ représente un groupe alkyle en C₁-C₄, alkoxy en C₁-C₄, halogène ou sulfo,
Z représente le reste -CH=CH₂- ou -CH₂-CH₂-Y et Y représente un groupe partant,
m vaut 0, 1 ou 2,
n vaut 0 ou 1,
ou V₂, V₃, V₄ et V₅, indépendamment les uns des autres, représentent un reste de formule 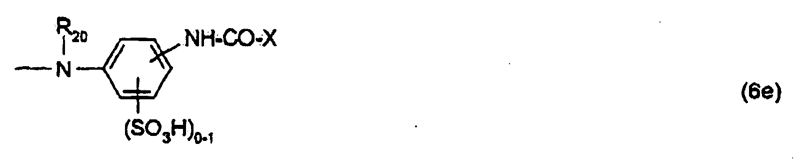 dans laquelle
R₂₀ représente un atome d'hydrogène, un groupe alkyle en C₁-C₄ non substitué ou substitué par un substituant hydroxy, sulfo, sulfato, carboxy ou cyano, et
X représente le reste 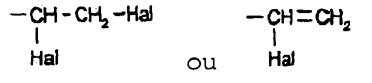 et Hal représente un atome de brome ou de chlore.

2. Procédé selon la revendication 1, **caractérisé en ce que**
R₄, R₆, R₁₀, R₁₅, R₁₆, R₁₇, R₁₉ et R₂₀ représentent un atome d'hydrogène.

3. Procédé selon l'une des revendications 1 et 2, **caractérisé en ce que** R₅, R₇, R₁₃ et R₁₄, indépendamment les uns des autres, représentent un atome d' hydrogène, alkyle en C₁-C₄, alkoxy en C₁-C₄, (alcanoyl en C₂-C₄)amino, uréido, sulfo ou carboxy, et
R₁₁ et R₁₂, indépendamment l'un de l'autre, représentent un atome d'hydrogène, un groupe alkyle en C₁-C₄, alkoxy en C₁-C₄ ou sulfo.

4. Procédé selon l'une des revendications 1 à 3, **caractérisé en ce que** R₈ représente un atome d'hydrogène, un groupe sulfométhyle ou carbamoyle, en particulier un atome d'hydrogène.

5. Procédé selon l'une des revendications 1 à 4, **caractérisé en ce que**
B. représente un reste alkylène en C₂-C₆, un reste méthylène-cyclohexylène éventuellement substitué par un substituant alkyle en C₁-C₄, ou un reste phénylène ou méthylène-phénylène-méthylène éventuellement substitué par un substituant alkyle en C₁-C₄, alkoxy en C₁-C₄, halogène ou sulfo.

6. Procédé selon l'une des revendications 1 à 5, **caractérisé en ce que** B représente un reste de formule

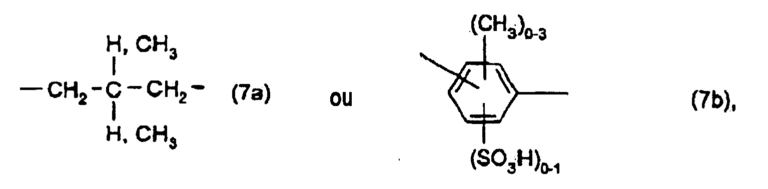

7. Procédé selon l'une des revendications 1 à 6, **caractérisé en ce que** V₂, V₃, V₄ et V₅, indépendamment les uns des autres, représentent un reste de formule (6c) ou (6d), dans laquelle R₁₇, R₁₈, R₁₉, Z, m et n possèdent les significations données à la revendication 1.

8. Procédé selon l'une des revendications 1 à 7, **caractérisé en ce que** m vaut 0.

9. Procédé selon l'une des revendications 1 à 8, **caractérisé en ce que** n vaut 0.

10. Procédé selon l'une des revendications 1 à 19, **caractérisé en ce qu'**un post-traitement est effectué à une valeur de pH 7 à 12 et à une température de 30 à 100°C.

11. Procédé selon la revendication 10, **caractérisé en ce qu'**on ajoute au post-traitement un agent réducteur, en particulier un hydrosulfite.

12. Colorant réactif de formule 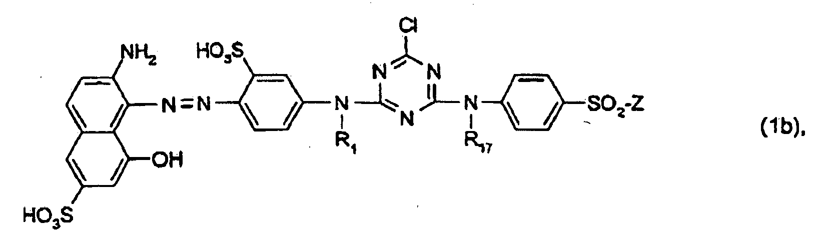 dans laquelle
R₁ et R₁₇, indépendamment l'un de l'autre, représentent un atome d'hydrogène, un groupe alkyle en C₁-C₄ non substitué ou substitué par un substituant hydroxy, sulfo, sulfato, carboxy ou cyano, et
Z représente le reste -CH=CH₂ ou -CH₂-CH₂-Y et Y est un groupe partant.

13. Utilisation d'un colorant réactif de formule (1b) selon la revendication 12 pour la teinture ou l'impression de matière fibreuse polyamide naturel ou synthétique.

14. Utilisation d'un colorant réactif de formule (1b) selon la revendication 12 pour la teinture ou l'impression de matière fibreuse polyamide synthétique.
